(19) **Europäisches Patentamt**

**European Patent Office**

**Office européen des brevets**

(11) **EP 1 073 508 B1**

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(21) Anmeldenummer: **99915663.1**

(22) Anmeldetag: **19.03.1999**

(51) Int Cl.⁷: **B01D 53/50**

(86) Internationale Anmeldenummer:
**PCT/EP99/01819**

(87) Internationale Veröffentlichungsnummer:
**WO 99/051328 (14.10.1999 Gazette 1999/41)**

(54) **VERFAHREN ZUM ABTRENNEN VON SCHWEFELDIOXID AUS ABGAS MITTELS MEERWASSER UND RAUCHGASENTSCHWEFELUNGSANLAGE ZUR DURCHFÜHRUNG DES VERFAHRENS**

METHOD FOR SEPARATING SULPHUR DIOXIDE FROM OFF-GAS BY MEANS OF SEA WATER AND FLUE-GAS DESULPHURIZATION PLANTS FOR THE IMPLEMENTATION OF SAID METHOD

PROCEDE DE SEPARATION DE DIOXYDE DE SOUFRE CONTENU DANS DES GAZ DE FUMEE A L'AIDE D'EAU DE MER ET INSTALLATION DE DESULFURATION DES GAZ DE FUMEE POUR METTRE LEDIT PROCEDE EN OEUVRE

(84) Benannte Vertragsstaaten:
**CY DE ES GR IE IT PT**

(30) Priorität: **04.04.1998 DE 19815207**

(43) Veröffentlichungstag der Anmeldung:
**07.02.2001 Patentblatt 2001/06**

(73) Patentinhaber: **L & C STEINMUELLER GMBH**
**D-51641 Gummersbach (DE)**

(72) Erfinder:
• **DREUSCHER, Helmut**
**D-51674 Wiehl (DE)**
• **HEIN, Hans-Dieter**
**D-51588 Nümbrecht (DE)**

(74) Vertreter: **Radünz, Ingo, Dipl.-Ing.**
**Schumannstrasse 100**
**40237 Düsseldorf (DE)**

(56) Entgegenhaltungen:
EP-A- 0 588 587     DE-A- 2 322 958
DE-A- 19 527 836     DE-C- 19 535 475
GB-A- 2 159 507     US-A- 4 152 218

**Beschreibung**

Die Erfindung betrifft zunächst ein Verfahren zum Abtrennen von Schwefeldioxid und ggfl. weiterer Verunreinigungen aus Abgas, bei dem das Abgas in einem Absorptionsturm zur Absorption von Schwefeldioxid und zur Umsetzung des absorbierten Schwefeldioxids durch im Meerwasser enthaltene Bicarbonate in Bisulfite mittels Waschdüsen mit aus einem Pumpensumpf herangeführtem Meerwasser beaufschlagt wird, der Flüssigkeitssumpf des Absorptionsturms belüftet wird, die Flüssigkeit aus dem Flüssigkeitssumpf des Absorptionsturms abgezogen und zur Neutralisation mit frischem Meerwasser gemischt wird.

Ein solches Verfahren ist aus der DE 195 35 475 C1 (Lentjes Bischoff) bekannt. Bei diesem Verfahren wird der pH-Wert der aus dem Flüssigkeitssumpf des Absorptionsturms abgezogenen Flüssigkeit gemessen und es werden die Meßwertabweichungen von einem im Bereich von pH 4,0 - pH 5 festgelegten Sollwert bestimmt. Nach Maßgabe der Meßwertabweichungen wird ein dem Flüssigkeitssumpf im Absorptionsturm zugeführter Meerwasserzusatzstrom oder ein aus dem Flüssigkeitssumpf in die Absorptionszone des Absorptionsturms, d. h. in die Zone, in der das Abgas mit Meerwasser im Gegenstrom beaufschlagt wird, zurückgeführter Flüssigkeitsstrom mengenmäßig geregelt derart, daß der pH-Wert in dem Flüssigkeitssumpf während der Belüftung im Bereich pH 4,0 - pH 5 gehalten wird. Die im wesentlichen nur Bisulfate enthaltende und aus dem Flüssigkeitssumpf des Absorptionsturms abgezogene Flüssigkeit wird zum Zwecke der Sulfatbildung und Neutralisation in einem Nachreaktionsbecken mit frischem Meerwasser gemischt. Bei dem gattungsgemäßen Verfahren wird also davon ausgegangen, daß die dem Absorptionsturm zugeführte Luftmenge und ggfl. der unmittelbar dem Waschflüssigkeitssumpf zurückgeführte Meerwasserzusatzstrom nicht ausreiche, um bereits im Flüssigkeitssumpf des Absorptionsturms die Bisulfate in Sulfate umzuwandeln. Es muß daher ein gesondertes Nachreaktionsbecken vorgesehen sein. Mit anderen Worten, in dem Nachreaktionsbecken erfolgt in einem von der Bisulfatbildung unabhängigen späteren Schritt durch Zugabe von zusätzlichem Meerwasser die Umwandlung von Bisulfat zu Sulfat.

Bei dem bekannten Verfahren wird eine vergleichbar aufwendige Regelung betrieben und es ist ein Nachreaktionsbecken erforderlich.

Aus der DE-Z. "Verfahrenstechnik" 25 (1991) No. 9, S. 12-14 (ABB Fläkt) ist ein Verfahren zur Entschwefelung von Abgas mit Meerwasser als Absorptionsmittel bekannt geworden, bei dem die Schwefeldioxide durch Absorption in dem Meerwasser aus dem Abgas entfernt werden. Die aus dem Absorptionsturm abgezogene Flüssigkeit fließt in einen Mischbehälter, in dem es mit Meerwasser vermischt wird. In dem Mischer wird Luft zur Sulfatbildung und zur Sättigung des Wassers mit Sauerstoff bereitgestellt.

Aus der US 4,804,523 (Bechtel Group) ist ein Entschwefelungsverfahren mittels Meerwasser bekannt, bei dem ein Wäscher mit einem Waschflüssigkeitskreislauf betrieben wird, der Magnesiumhydroxid, Magnesiumsulfit und Magnesiumsulfat enthält. Das Magnesiumsulfit bzw. Magnesiumsulfat ist aus Magnesiumhydroxid abgeleitet, das aus einer Reaktion zwischen löslichen Magnesiumsalzen aus dem Meerwasser und Calciumhydroxid abgeleitet wird, das dem Waschsystem zugeführt wird. Der Flüssigkeitssumpf im Wäscher bzw. Absorptionsturm wird belüftet, um das in der Waschflüssigkeit vorhandene Magnesiumsulfit und Bisulfit zu oxidieren. Ein Teil der Waschflüssigkeit aus dem Absorptionsturm wird abgezogen und zur Lösung des sich in der Waschflüssigkeit befindlichen Gipses mit Meerwasser vermischt. Im übrigen ist darauf hinzuweisen, daß bei den mit Kalk oder Kalkstein betriebenen Naßrauchgasreinigungsanlagen die Absorption und die Oxidation zum Gips im Wäscher selbst bei einem pH-Wert von 4 bis 7, vorzugsweise 4.5 bis 6.5, im Wäschersumpf erfolgen.

Schließlich ist aus der EP 0 485 011 B1 (Hoogovens Groep) ein Verfahren zum Entfernen von Schwefeldioxiden aus Abgasen mit Meerwasser bekannt, bei dem vor dem Beaufschlagen des Abgases mit Meerwasser das Abgas mit einer sauren Lösung in Kontakt gebracht wird, um eine Vorreinigung zu erreichen.

Es ist die Aufgabe der vorliegenden Erfindung ein gattungsgemäßes Verfahrens anzugeben, bei dem eine einfache Messung und Kontrolle des Verfahrensablaufs unter Verzicht auf ein gesondertes Nachreaktionsbecken zum Zwecke der Sulfatbildung erreicht werden kann.

Diese Aufgabe wird dadurch gelöst, daß der Volumenstrom und zumindest der Schwefeldioxidgehalt des Rohgases, sowie der Bicarbonatgehalt des dem Pumpensumpf zugeführten Meerwassers gemessen werden, daß der Volumenstrom des dem Pumpensumpf zugeführten Meerwassers oder der Volumenstrom der aus dem Flüssigkeitssumpf des Absorptionsturms abzogenen Flüssigkeit gemessen wird und daß nach Maßgabe der abzuscheidenden Schwefeldioxidmenge der Meerwasserzulauf zu dem mit dem Flüssigkeitssumpf des Absorptionsturms in Strömungsverbindung stehenden Pumpensumpf gesteuert wird derart, daß die aus dem Flüssigkeitssumpf abgezogene Flüssigkeit im wesentlichen Sulfate enthält.

Der Meerwasserzulauf zum Pumpensumpf kann durch direkte Beeinflussung des Zulaufs zum Pumpensumpf gesteuert werden oder indirekt durch Beeinflussung des Abzugs der Flüssigkeit aus dem Flüssigkeitssumpf. Die direkte Beeinflussung wird bevorzugt.

Bei der erfindungsgemäßen Verfahrensführung wird somit mit Hilfe einer einfachen Messung und Steuerung dem Pumpensumpf in Abhängigkeit von der abzuscheidenden Schwefeldioxidmenge so viel Meerwasser zugeführt, daß aus dem Flüssigkeitssumpf eine Flüssigkeit abzogen wird, die keine Bisulfate mehr enthält, sondern im wesentlichen nur Sulfate. Die Vermischung der aus dem Flüssigkeitsumpf abgezogenen Flüssigkeit mit frischem Meerwasser zur Anhebung des pH-Werts kann in der sowieso erforderlichen Leitung zwischen Absorptionsturm und Meer vorgenommen werden.

Die strömungsmäßige Verbindung zwischen Pumpensumpf und Flüssigkeitssumpf kann auf einfache Weise mit Hilfe einer Tauchwand aufgebaut werden.

Dabei ist es zweckmäßig, wenn die das freie Ende der Tauchwand umströmende Flüssigkeit längs einer in Abstand von der Tauchwand im Flüssigkeitssumpf angeordneten Überströmwand geführt wird.

Weiterhin ist es von Vorteil, wenn der Abzug der Flüssigkeit aus dem Flüssigkeitssumpf des Absorptionsturms in einem Bereich erfolgt, der vom Hauptvolumen des Flüssigkeitssumpfes durch eine Tauchwand abgetrennt wird.

Die Erfindung richtet sich auch auf eine Rauchgasentschwefelungsanlage mit einem Absorptionsturm mit einem Flüssigkeitssumpf, einen über einen Meerwasserkanal mit Meerwasser beaufschlagbaren Pumpensumpf, mindestens einer mit dem Pumpensumpf verbundenen und von einer Pumpe gespeisten Meerwasserzuführleitung zu mindestens einer Düsenzone des Absorptionsturms und einer Abzugsleitung für den Abzug von Flüssigkeit aus dem Flüssigkeitssumpf des Absorptionsturms.

Erfindungsgemäß ist vorgesehen, daß Meßeinrichtungen für die Messung des Volumenstroms und zumindest des Schwefelgehalts des Rohgases, sowie eine Meßeinrichtung für den Bicarbonatgehalt des dem Pumpensumpf zugeführten Meerwassers vorgesehen sind, daß eine Meßeinrichtung für den dem Pumpensumpf zugeführten Volumenstrom an Meerwasser oder eine Meßeinrichtung für den aus dem Flüssigkeitssumpf des Absorptionsturms abgezogenen Volumenstroms an Flüssigkeit vorgesehen sind, daß die Meßeinrichtungen auf eine Meerwasserzulaufsteuerung aufgeschaltet sind, die nach Maßgabe der abzuscheidenden Schwefeldioxidmenge den Meerwasserzulauf zu dem mit dem Flüssigkeitssumpf des Absorptionsturms in Strömungsverbindung stehenden Pumpensumpf derart steuert, daß die aus dem Flüssigkeitssumpf abgezogene Flüssigkeit im wesentlichen Sulfate enthält.

Dabei ist die strömungsmäßige Verbindung zwischen Pumpensumpf und Flüssigkeitssumpf mit Hilfe einer in die Flüssigkeit ragenden Tauchwand aufgebaut.

Bei der Rauchgasentschwefelungsanlage ist weiterhin in vorteilhafter Weise vorgesehen, daß die Abzugsleitung für den Abzug von Flüssigkeit aus dem Flüssigkeitssumpf mit einem Teilbereich des Flüssigkeitssumpfs verbunden ist, der von dem anderen Teilbereich des Flüssigkeitssumpfes durch eine Tauchwand getrennt ist.

Schließlich ist vorgesehen, daß der die strömungsmäßige Verbindung zwischen Pumpensumpf und Flüssigkeitssumpf aufbauenden Tauchwand in Strömungsrichtung der Flüssigkeit aus dem Pumpensumpf in den Flüssigkeitssumpf gesehen eine Überströmwand nachgeordnet ist.

Die Unteransprüche 9 - 10 betreffen vorteilhafte Ausgestaltungen der Steuerung des Meerwasserzulaufs zum Pumpensumpf.

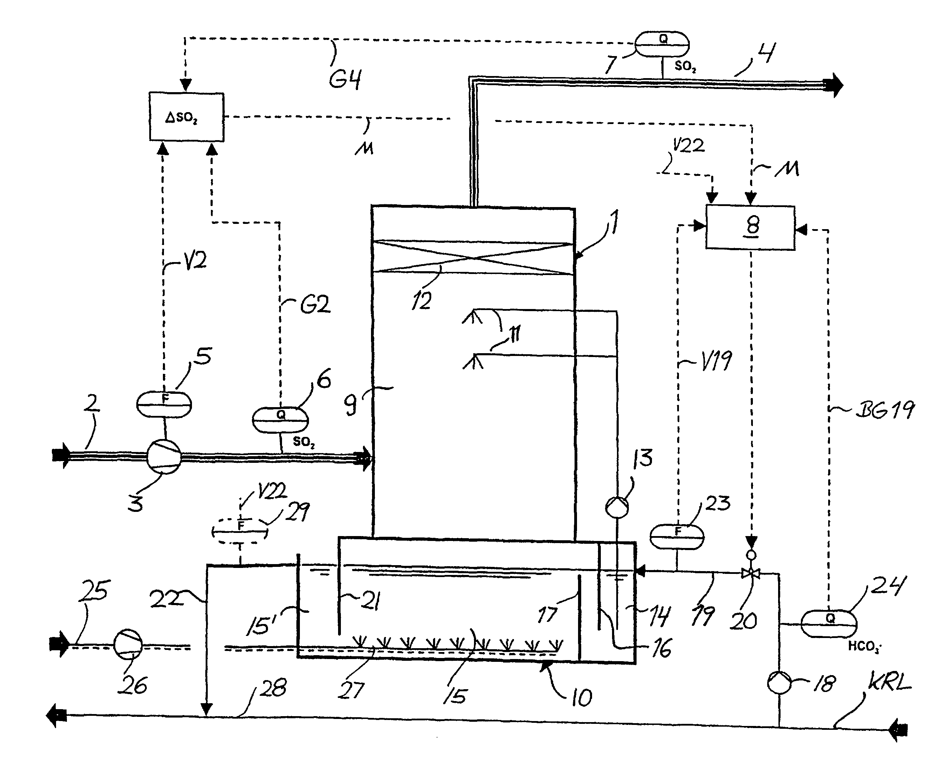

Ein Beispiel für die erfindungsgemäße Verfahrensführung und erfindungsgemäße Rauchgasreinigungsanlage soll an Hand der beigefügten Figur näher erläutert werden.

Einem Absorptionsturm 1 wird über einen Kanal 2 mittels eines Gebläses 3 zu entschwefelndes Abgas zugeführt. Das gereinigte Abgas wird aus diesem über einen am oberen Ende des Turms ansetzenden Reingaskanal 4 abgezogen. Mittels einer Meßeinrichtung 5 wird der Volumenstrom $V_2$ des zu reinigenden Gases und mittels einer Meßeinrichtung 6 der Schwefeldioxidgehalt $G_2$ des Rohgases gemessen. Weiterhin wird mit einer Meßeinrichtung 7 der Schwefeldioxidgehalt $G_4$ des Reingases gemessen. Daraus wird die abzuscheidende Schwefeldioxidmenge M abgeleitet. Es ist denkbar, daß nur der Schwefeldioxidgehalt $G_2$ des Rohgases bestimmt wird und aus dieser die abzuscheidene Menge abgeleitet wird. Die abzuscheidene Schwefeldioxidmenge M wird auf eine Seewasserzulaufsteuerung 8 geführt.

Der Absorberturm 1 weist einen Turmabschnitt 9 und einen Sumpfabschnitt 10 auf. In dem Turmabschnitt 9 sind Düsenstöcke 11 vorgesehen, denen in Strömungsrichtung des zu reinigenden Gases eine Tröpfchenabscheideeinrichtung 12 nachgeschaltet ist. Die Düsenstöcke 11 bestimmen eine Absorptionszone. Über eine Pumpe 13 können die Düsenstöcke 11 mit Flüssigkeit aus einem im Sumpfabschnitt 10 vorgesehenen Pumpensumpf 14 für die Pumpe 13 mit Flüssigkeit beaufschlagt werden. Die aus den Düsenstöcken 11 austretende Flüssigkeit fällt nach unten und sammelt sich in einem Absorptionsturmflüssigkeitssumpf 15. Der Pumpensumpf 14 und Absorptionsturmflüssigkeitsumpf 15 sind über eine Tauchwand 16 und eine von dieser auf Abstand angeordneten Überströmwand 17 voneinander getrennt.

Bei der in den Figuren dargestellten Verfahrensweise wird mittels einer drehzahlfesten Meerwasserpumpe 18 der Pumpensumpf 14 über einen Meerwasserkanal 19 mit frischem Meerwasser beaufschlagt, das über eine Kondensatorrücklaufleitung KRL von dem Kondensator der Verbrennungsanlage herangeführt wird, deren Abgas entschwefelt werden soll. Das Meerwasser ist leicht alkalisch, z. B. pH = 8, da es Natrium- und Magnesiumbicarbonate und geringeren Mengen Calciumbicarbonate enthält. In dem Meerwasserkanal 19 ist ein ansteuerbares Ventil 20 eingeschaltet.

Der Absorberturmsumpf 15 ist mittels einer Tauchwand 21 von einem Abzugssumpf 15' abgetrennt. Aus dem Abzugssumpf 15' kann mittels eines Kanals 22 Flüssigkeit abgezogen werden.

Die Flüssigkeitsvolumina bzw. Sümpfe 14, 15 und 15' sind mittels Tauchwänden bzw. Überströmwänden voneinander getrennt. Andere Ausführungsformen sind denkbar. Es ist z. B. möglich, den Sumpf 14 in einem getrennten Behälter auszubilden. Es kommt nur darauf an, daß die gewünschten Strömungsverbindungen zwischen den Sümpfen aufgebaut werden. Der Kanal 22 kann aber auch direkt an geeigneter Stelle mit dem Sumpf 15 verbunden sein.

Mittels einer Meßeinrichtung 23 wird der Volumenstrom V19 des dem Pumpensumpf 14 zugeführten Meerwassers bestimmt und auf die Seewasserzulaufsteuerung 8 aufgeschaltet. Weiterhin wird mittels einer Meßeinrichtung 24 der Bicarbonatgehalt BG19 des frischen Meerwassers bestimmt und ebenfalls auf die Seewasserzulaufsteuerung 8 geschaltet. Mit Hilfe der Werte M und BG19 erfolgt die rechnerische Bestimmung der benötigten Wassermenge. Der Meerwasserzulauf wird über die Abweichung zwischen gemessener Meerwassermenge bzw. -Volumen V19 und berechneter Meerwassermenge korrigiert. Das Ventil 20 wird somit derart angesteuert, daß die zugeführte Bicarbonatmenge für eine chemische Bindung der in der Absorptionszone absorbierten $SO_2$ - Menge und für die Umwandlung der im Sumpf 15 vorhandenen Bisulfate in Sulfate unter den oxidierenden Bedingungen im Sumpf 15 ausreicht. Dem Sumpf 15 wird mittels einer Luftleitung 25 und einem Gebläse 26 über im Sumpf angeordnete Düsenstöcke 27 in ausreichender Menge Oxidationsluft zugeführt. Die Verfahrensführung erfolgt so, daß das Reaktionsgleichgewicht gemäß Gleichung (5) der nachfolgenden Tabelle bei einem pH-Wert > 4 zur Sulfatbildung hin verschoben wird. Das sich nach Gleichung (6) bildende Kohlendioxid wird mit dem Reingas abgezogen.

Bei Betrieb der Anlage kann bei einer Drosselung des Ventils 20 unter die Fördermenge der Pumpe 13 eine gewünschte Rückströmung aus dem Sumpf 15 in den Sumpf 14 bei konstanter Abzugsmenge über Kanal 22 auftreten. Praktisch jedoch erfolgt ein Durchlaufbetrieb durch die Absorptionszone. Damit liegt in der Regel die Meerwassertemperatur in der Absorptionszone nicht so hoch wie bei einer im Kreislauf betriebenen Rauchgasentschwefelungsanlage.

In Abhängigkeit vom Abscheidegrad können die Fördermengen der Pumpe 13 und des Gebläses 26 verstellt werden, z. B. bei Änderung des Brennstoffes oder bei Laständerungen bei der die zu reinigenden Abgase abgebenden Verbrennungsanlage

Die aus dem Abzugssumpf 15' über Leitung 22 abgezogene Waschflüssigkeit wird in einer ebenfalls mit Kondensatrücklaufmeerwasser beaufschlagten Leitung 28 zur Anhebung des in der Absorptionszone herabgesetzten pH-Werts vermischt und dem Meer zugeführt. Die Leitung 28 kann die Kondensatrücklaufleitung KRL selbst sein. Da die Sulfatreaktionen nach Gleichung (5) bereits im Absorptionsturmsumpf 15 abgeschlossen sind und pH-Wertanhebung durch die Zumischung des frischen Meerwassers 28 sehr schnell erfolgt, ist kein Nachreaktionsbecken erforderlich.

Anstelle der Messung des Volumenstroms V19 des dem Pumpensumpf 14 zugeführten Meerwassers kann zur Bestimmung der benötigten Meerwassermenge eine entsprechende Meßeinrichtung 29 zur Messung des Volumenstroms V22 der über den Kanal 22 aus dem Sumpf 20 bzw. 15 abgezogenen Flüssigkeit herangezogen werden.

Schließlich kann es auch zweckmäßig sein, den Meerwasserzulauf über die Messung der Sauerstoffkonzentration oder des Redox-Potentials der Flüssigkeit im Ablaufkanal 22 zu korrigieren.

Anstelle der drehzahlfesten Pumpe 18 kann unter Fortfall des Ventils 20 eine drehzahlgesteuerte Pumpe eingesetzt werden, deren Drehzahl von der Seewasserzulaufsteuerung 8 verändert werden kann.

Falls das Gefälle der Kondensatrücklaufleitung KRL zum Absorptionsturm 1 hin ausreicht, kann in dem Meerwasserkanal die Pumpe entfallen; es reicht ein ansteuerbares Ventil 20 aus.

Weiterhin kann es in Abhängigkeit von der geodätischen Höhenlage des Sumpfabschnitts 10 erforderlich sein, im Abzugskanal 22 eine Abzugspumpe unter Entfall der Pumpe 18 vorzusehen. Die steuernde Beeinflussung erfolgt dann wiederum über ein Ventil im Zulaufkanal.

| **Reaktionsgleichungen bei der $SO_2$-Abscheidung mit Meerwasser** | |
|---|---|
| (1) | $SO_2(g) \leftrightarrow SO_2(I)$ |
| (2) | $SO_2(I) + H_2O \leftrightarrow HSO_3^- + H^+ \leftrightarrow SO_3^{2-} + 2H^+$ |
| (3) | $CO_2(g) \leftrightarrow CO_2(I)$ |
| (4) | $CO_2(I) + H_2O \leftrightarrow HCO_3^- + H^+ \leftrightarrow CO_3^{2-} + 2H^+$ |
| (5) | $HSO_3^- + 0{,}5\ O_2 \leftrightarrow HSO_4^- \leftrightarrow SO_4^{2-} + H^+$ |
| (6) | $HCO_3^- + H^+ \leftrightarrow CO_2\uparrow + H_2O \leftrightarrow CO_3^{2-} + 2H^+$ |
| (g = gasförmige Phase) | |
| (I = flüssige Phase) | |

**Patentansprüche**

1. Verfahren zum Abtrennen von Schwefeldioxid und ggfl. weiterer Verunreinigungen aus Abgas, bei dem das Abgas in einem Absorptionsturm zur Absorption von Schwefeldioxid und zur Umsetzung des absorbierten Schwefeldioxids durch im Meerwasser enthaltene Bicarbonate in Bisulfite mittels Waschdüsen mit aus einem Pumpensumpf herangeführtem Meerwasser beaufschlagt wird, der Flüssigkeitssumpf des Absorptionsturms belüftet wird, die Flüssigkeit aus dem Flüssigkeitssumpf des Absorptionsturms abgezogen und zur Neutralisation mit frischem Meerwasser gemischt wird, **dadurch gekennzeichnet,** **daß** der Volumenstrom und zumindest der Schwefeldioxidgehalt des Rohgases, sowie der Bicarbonatgehalt des dem Pumpensumpf zugeführten Meerwassers gemessen werden, daß der Volumenstrom des dem Pu m-pensumpf zugeführten Meerwassers oder der Volumenstrom der aus dem Flüssigkeitssumpf de Absorptionsturms abgezogenen Flüssigkeit gemessen wird und daß nach Maßgabe der abzuscheidenden Schwefeldioxidmenge der Meerwasserzulauf zu dem mit dem Flüssigkeitssumpf des Absorptionsturms in Strömungsverbindung stehenden Pumpensumpf gesteuert wird derart, daß die aus dem Flüssigkeitssumpf abgezogene Flüssigkeit im wesentlichen Sulfate enthält.

2. Verfahren nach Anspruch 1, **dadurch gekennzeichnet,** **daß** die strömungsmäßige Verbindung zwischen Pumpensumpf und Flüssigkeitssumpf mit Hilfe einer Tauchwand aufgebaut wird.

3. Verfahren nach Anspruch 1 oder 2, **dadurch gekennzeichnet,** **daß** die das freie Ende der Tauchwand umströmende Flüssigkeit längs einer in Abstand von der Tauchwand im Flüssigkeitssumpf angeordneten Überströmwand geführt wird.

4. Verfahren nach mindestens einem der Ansprüche 1 - 3, **dadurch gekennzeichnet,** **daß** der Abzug der Flüssigkeit aus dem Flüssigkeitssumpf des Absorptionsturm in einem Abzugssumpf erfolgt, der vom Hauptvolumen des Flüssigkeitssumpes durch eine Trennwand abgetrennt wird.

5. Rauchgasentschwefelungsanlage mit einem Absorptionsturm (1) mit einem Flüssigkeitssumpf (15), einem über einen Meerwasserkanal (19) mit Meerwasser beaufschlagbaren Pumpensumpf (14), mindestens einer mit dem Pumpensumpf verbundenen und von einer Pumpe gespeisten Meerwasserzuführleitung zu mindestens einer Düsenzone des Absorptionsturms und einer Abzugsleitung für den Abzug von Flüssigkeit aus dem Flüssigkeitssumpf des Absorptionsturms, **dadurch gekennzeichnet,** **daß** Meßeinrichtungen (5; 6) für die Messung des Volumenstroms (V2) und zumindest des Schwefelgehalts (G2) des Rohgases, sowie eine Meßeinrichtung (24) für den Bicarbonatgehalt (BG19) des dem Pumpensumpf (14) zugeführten Meerwassers vorgesehen sind, daß eine Meßeinrichtung (23) für den dem Pumpensumpf (14) zugeführten Volumenstrom (V19) an Meerwasser oder eine Meßeinrichtung (29) für den aus dem Flüssigkeitssumpf (15) des Absorptionsturms (1) abgezogenen Volumenstroms (V22) an Flüssigkeit vorgesehen sind, daß die Meßeinrichtungen auf eine Meerwasserzulaufsteuerung (8) aufgeschaltet sind, die nach Maßgabe der abzuscheidenden Schwefeldioxidmenge den Meerwasserzulauf (19) zu dem mit dem Flüssigkeitssumpf (15) des Absorptionsturms (1) in Strömungsverbindung stehenden Pumpensumpf (14) derart steuert, daß die aus dem Flüssigkeitssumpf abgezogene Flüssigkeit (22) im wesentlichen Sulfate enthält.

6. Rauchgasentschwefelungsanlage nach Anspruch 5; **dadurch gekennzeichnet,** **daß** die strömungsmäßige Verbindung zwischen Pumpensumpf (14) und Flüssigkeitssumpf (15) mit Hilfe einer in die Flüssigkeit ragenden Tauchwand (16) aufgebaut ist.

7. Rauchgasentschwefelungsanlage nach Anspruch 5 oder 6; **dadurch gekennzeichnet,** **daß** die Abzugsleitung (22) für den Abzug von Flüssigkeit aus dem Flüssigkeitssumpf (15) mit einem Teilbereich (15') des Flüssigkeitssumpfs verbunden ist, der von dem anderen Teilbereich des Flüssigkeitssumpf durch eine Tauchwand (21) getrennt ist.

**8.** Rauchgasentschwefelungsanlage nach mindestens einem der Ansprüche 5 - 7;
**dadurch gekennzeichnet,**
**daß** der die strömungsmäßige Verbindung zwischen Pumpensumpf (14) und Flüssigkeitssumpf (15) aufbauenden Tauchwand (16) in Strömungsrichtung der Flüssigkeit aus dem Pumpensumpf (14) in den Flüssigkeitssumpf (15) gesehen eine Überströmwand (17) nachgeordnet ist.

**9.** Rauchgasentschwefelungsanlage nach mindestens einem der Ansprüche 5 - 8,
**dadurch gekennzeichnet,**
**daß** in dem Meerwasserkanal (19) eine ansteuerbare drehzahlveränderliche Pumpe (18) angeordnet ist.

**10.** Rauchgasentschwefelungsanlage nach mindestens einem der Ansprüche 5 - 8
**dadurch gekennzeichnet,**
**daß** in den Meerwasserkanal (19) eine drehzahlfeste Pumpe und ein der Pumpe nachgeschaltetes ansteuerbares Ventil (20) angeordnet sind.

**11.** Rauchgasentschwefelungsanlage nach mindestens einem der Ansprüche 5 - 8,
**dadurch gekennzeichnet,**
**daß** der Meerwasserkanal (19) ein Gefällekanal ist, in dem ein ansteuerbares Ventil (20) angeordnet ist.

**Claims**

**1.** Method of separating sulfur dioxide and in a given case further contaminants from waste gas, in which the waste gas is, for absorption of sulfur dioxide and for conversion of the absorbed sulfur dioxide, acted on in an absorption tower by bicarbonate, which is contained in salt water, in bisulfate by means of washing nozzles with salt water fed from a pump sump, the liquid sump of the absorption tower is ventilated, and the liquid is removed from the liquid sump of the absorption tower and mixed with fresh salt water for neutralisation, **characterised in that** the volume flow and at least the sulfur dioxide content of the raw gas, as well as the bicarbonate content of the salt water fed to the pump sump, are measured, that the volume flow of the salt water fed to the pump sump or the volume flow of the liquid withdrawn from the liquid sump of the absorption tower is measured and that in dependence on the sulfur dioxide quantity, which is to be separated off, the salt water feed to the pump sump disposed in flow connection with the liquid sump of the absorption tower is controlled in such a manner that the liquid withdrawn from the liquid sump substantially contains sulfates.

**2.** Method according to claim 1, **characterised in that** the connection in terms of flow between pump sump and liquid sump is formed with the help of a submerged wall.

**3.** Method according to claim 1 or 2, **characterised in that** the liquid flowing around the free end of the submerged wall is led along an overflow wall arranged at a spacing from the submerged wall in the liquid sump.

**4.** Method according to at least one of claims 1 to 3, **characterised in that** the withdrawal of liquid from the liquid sump of the absorption tower is carried out in a withdrawal sump which is separated from the main volume of the liquid sump by a partition wall.

**5.** Flue gas desulfurisation installation with an absorption tower (1) with a liquid sump (15), a pump sump (14) loadable with salt water by way of a salt water channel (19), at least one salt water feed duct, which is connected with the pump sump and supplied by a pump, to at least one nozzle zone of the absorption tower and an outlet duct for withdrawal of liquid from the liquid sump of the absorption tower, **characterised in that** measuring devices (5; 6) for measuring the volume flow (V2) and at least the sulfur content (G2) of the raw gas, as well as a measuring device (24) for the bicarbonate content (BG19) of the salt water fed to the pump sump (14), are provided, that a measuring device (23) for the volume flow (V19) of salt water fed to the pump sump (14) or a measuring device (29) for the volume flow (V22) of liquid withdrawn from the liquid sump (15) of the absorption tower (1) is provided, that the measuring devices are connected to a salt water feed control (8) which in dependence on the sulfur dioxide quantity to be separated off controls the salt water feed (19) to the pump sump (14), which is disposed in flow connection with the liquid sump (15) of the absorption tower (1), in such a manner that the liquid (22) withdrawn from the liquid sump substantially contains sulfates.

**6.** Flue gas desulfurisation installation according to claim 5, **characterised in that** the connection in terms of flow between pump sump (14) and liquid sump (15) is formed with the help of a submerged wall (16) projecting into the liquid.

7.  Flue gas desulfurisation installation according to claim 5 or 6, **characterised in that** the outlet duct (22) for removal of liquid from the liquid sump (15) is connected with a part region (15') of the liquid sump, which is separated from the other part region of the liquid sump by a submerged wall (21).

8.  Flue gas desulfurisation installation according to at least one of claims 5 to 7, **characterised in that** an overflow wall (17) is arranged downstream, as seen in flow direction of the liquid from the pump sump (14) to the liquid sump (15), of the submerged wall (16) forming the connection in terms of flow between pump sump (14) and liquid sump (15).

9.  Flue gas desulfurisation installation according to at least one of claims 5 to 8, **characterised in that** a controllable, speed-variable pump (18) is arranged in the salt water channel (19).

10. Flue gas desulfurisation installation according to at least one of claims 5 to 8, **characterised in that** a fixed-speed pump and a controllable valve (20), which is connected downstream of the pump, are arranged in the salt water channel (19).

11. Flue gas desulfurisation installation according to at least one of claims 5 to 8, **characterised in that** the salt water channel (19) is a descending channel in which a controllable valve (20) is arranged.

**Revendications**

1.  Procédé pour la séparation de dioxyde de souffre et éventuellement d'autres impuretés à partir d'un gaz résiduaire, dans lequel le gaz résiduaire est frappé au moyen de buses de lavage par de l'eau de mer amenée d'un puisard d'aspiration dans une tour d'absorption pour l'absorption du dioxyde de souffre et pour la transformation du dioxyde de souffre absorbé en bisulfite par le bicarbonate contenu dans l'eau de mer, le bassin de liquide de la tour d'absorption est aéré, le liquide est extrait du bassin de liquide de la tour d'absorption et est mélangé à de l'eau de mer fraîche pour la neutralisation,
    **caractérisé en ce que** le courant volumique et au moins la teneur en dioxyde de souffre du gaz brut, ainsi que la teneur en bicarbonate de l'eau de mer amenée au puisard d'aspiration sont mesurés, **en ce que** le courant volumique de l'eau de mer amenée au puisard d'aspiration ou le courant volumique du liquide extrait du bassin de liquide de la tour d'absorption est mesuré, et en ce qu"en proportion de la quantité de dioxyde de souffre à séparer, l'arrivée d'eau de mer est dirigée vers le puisard d'aspiration se trouvant en communication de fluide avec le bassin de liquide de la tour d'absorption, de sorte que le liquide extrait du bassin de liquide contienne essentiellement des sulfates.

2.  Procédé selon la revendication 1, **caractérisé en ce que** la communication de fluide entre le puisard d'aspiration et le bassin de liquide est construite à l'aide d'une paroi plongeuse.

3.  Procédé selon la revendication 1 ou 2, **caractérisé en ce que** le liquide s'écoulant autour de l'extrémité libre de la paroi plongeuse est guidé le long d'une paroi de trop-plein agencée à distance de la paroi plongeuse dans le bassin de liquide.

4.  Procédé selon au moins l'une des revendications 1 à 3, **caractérisé en ce que** l'extraction du liquide à partir du bassin de liquide de la tour d'absorption s'effectue dans un bassin d'extraction qui est séparé du volume principal du puisard d'aspiration par une paroi de séparation.

5.  Installation de désulfuration de gaz de fumée, comportant une tour d'absorption (1) ayant un bassin de liquide (15), un puisard d'aspiration (14) pouvant être alimenté en eau de mer par l'intermédiaire d'un canal d'eau de mer (19), au moins une conduite d'arrivée d'eau de mer reliée au puisard d'aspiration et alimentée par une pompe vers au moins une zone d'injection de la tour d'absorption et au moins une conduite d'évacuation pour l'extraction du liquide à partir du bassin de liquide de la tour d'absorption,
    **caractérisé en ce que** sont prévus des dispositifs de mesure (5, 6) pour la mesure du courant volumique (V2) et au moins de la teneur en souffre (G2) du gaz brut, ainsi qu'un dispositif de mesure (24) pour la teneur en bicarbonate (BG19) de l'eau de mer amenée au puisard d'aspiration (14), **en ce que** sont prévus un dispositif de mesure (23) pour le courant volumique (V19) en eau de mer amené au puisard d'aspiration (14) ou un dispositif de mesure (29) pour le courant volumique (V2) en liquide extrait du bassin de liquide (15) de la tour d'absorption (1), **en ce que** les dispositifs de mesure sont reliés à une commande d'arrivée d'eau de mer (8) qui, en proportion de la quantité d'oxyde de souffre à séparer, commande l'arrivée d'eau de mer (19) vers le puisard d'aspiration (14) en communication de fluide avec le bassin de liquide (15) de la tour d'absorption (1), de telle sorte que le liquide (22) extrait du bassin de liquide contienne essentiellement des sulfates.

6. Installation de désulfuration de gaz de fumée selon la revendication 5, **caractérisé en ce que** la communication de fluide entre le puisard d'aspiration (14) et le bassin de liquide (15) est construite à l'aide d'une paroi plongeuse (16) s"élevant dans le liquide.

7. Installation de désulfuration de gaz de fumée selon la revendication 5 ou 6, **caractérisée en ce que** la conduite de d'évacuation (22) pour l'extraction du liquide à partir du bassin de liquide (15) est reliée à une région partielle (15') du bassin de liquide qui est séparée de l'autre région partielle du bassin de liquide par une paroi plongeuse (21).

8. Installation de désulfuration de gaz de fumée selon au moins l'une des revendications 5 à 7, **caractérisée en ce qu'**une paroi de trop-plein (17) est agencée après la paroi plongeuse (16), qui réalise la communication de fluide entre le puisard d'aspiration (14) et le bassin de liquide (15), en considérant la direction d'écoulement du liquide du puisard d'aspiration (14) dans le bassin de liquide (15).

9. Installation de désulfuration de gaz de fumée selon au moins l'une des revendications 5 à 8, **caractérisée en ce qu'**une pompe actionnable à régime variable (8) est agencée dans le canal d'eau de mer (19).

10. Installation de désulfuration de gaz de fumée selon au moins l'une des revendications 5 à 8, **caractérisée en ce.** qu'une pompe à régime fixe et une vanne actionnable (20) branchée après la pompe sont agencées dans le canal d'eau de mer (19).

11. Installation de désulfuration de gaz de fumée selon au moins une des revendications 5 à 8, **caractérisée en ce que** le canal d'eau de mer (19) est un canal en pente, dans lequel est agencée une vanne actionnable (20).